# EUROPÄISCHE PATENTANMELDUNG

(11) **EP 1 010 704 A2**
(43) Veröffentlichungstag der Anmeldung: **21.06.2000**
(21) Anmeldenummer: 99120767.1
(22) Anmeldetag: 20.10.1999
(51) Int. Cl.: C07F 7/18

(54) **Verfahren zur Herstellung von Carbamatoorganosilanen und Isocyanatoorganosilanen**

(30) Priorität: 14.12.1998 DE 19857532
(71) Anmelder: Degussa-Hüls Aktiengesellschaft, 60287 Frankfurt am Main (DE)
(72) Erfinder: Pinske, Klaus, Dr., 45721 Haltern (DE)

(57) **Zusammenfassung**

Verfahren zur Herstellung von Carbamatoorganosilanen (V) durch
a) einstufige Umsetzung von Aminoorganosilanen (I), Harnstoff (II) und Alkoholen (IV) in einer Rührkesselkaskade bei 150-250 °C und 7-40 bar
   oder
b) zweistufige Umsetzung von Aminoorganosilanen (I) und Harnstoff (II) in Alkoholen (IV) als Lösemittel in einem Destillationsreaktor bei 100-130 °C und 0,7-1,5 bar (abs.) zu Harnstofforganosilanen (III) als Zwischenprodukt und anschließender Umsetzung von III mit Alkoholen (IV) in einem Druckdestillationsreaktor bei 150-250 °C und 7-40 bar
sowie
Verfahren zur Herstellung von Harnstofforganosilanen (III) durch Umsetzung von Aminoorganosilanen (I) und Harnstoff (II) in Alkoholen (IV) als Lösemitteln in einem Destillationsreaktor bei 100-130 °C und 0,7-4 bar
oder
kontinuierliches Verfahren zur Herstellung von Isocyanatoorganosilanen (VI) durch
a) einstufige Umsetzung von Aminoorganosilanen (I), Harnstoff (II) und Alkoholen (IV) in einer Rührkesselkaskade bei 150-250 °C und 7-40 bar
   oder
b) zweistufige Umsetzung von Aminoorganosilanen (I) und Harnstoff (II) in Alkoholen (IV) als Lösemittel in einem Destillationsreaktor bei 100-130 ^{°}C und 0,7-1,5 bar (abs.) zu Harnstofforganosilanen (III) als Zwischenprodukt und anschließender Umsetzung von III mit Alkoholen (IV) in einem Druckdestillationsreaktor bei 150-250 °C und 7-40 bar zu Carbamatoorganosilanen (V)
   und
c) katalytischer Spaltung von V in flüssiger Phase.

## Beschreibung

Die Erfindung betrifft ein Verfahren zur Herstellung von Carbamatoorganosilanen aus Aminoorganosilanen, Harnstoff und Alkoholen. Sie betrifft insbesondere ein Verfahren zur thermischen, katalysierten Spaltung von Carbamatoorganosilanen zu Isocyanatoorganosilanen.

Verfahren zur Herstellung von Carbamatoorganosilanen und Isocyanatoorganosilanen sind bekannt.

Beispielsweise werden Carbamatoorganosilane durch Reaktion von Aminoorganosilanen mit Phosgen in Anwesenheit tertiärer Amine hergestellt (siehe DE-OS 35 44 601, JP-A-4 223 171).

Neben der Giftigkeit des Phosgens und den daraus resultierenden Sicherheitsvorkehrungen wirken sich nachteilig die Bildung chlorhaltiger Nebenprodukte und der zwangsweise Anfall von Salzen aus. Zudem lassen sich bestimmte Carbamatoorganosilan-Verbindungen aufgrund der Reaktionsbedingungen nicht herstellen.

In weiteren Verfahren werden anstelle von Phosgen Haloformiate, in Anwesenheit von tertiären Aminen bzw. Halosilanen (siehe JP-A-63 250 391, JP-A-01 275 587), oder Kohlendioxid, in Anwesenheit von tertiären Aminen und Halosilanen (siehe CA 1 108 174, DE-OS 27 22 117), oder organische Carbonate, durch starke Basen katalysiert (siehe EP-OS 0 583 581), eingesetzt.

Nachteile dieser Verfahren sind neben teilweise niedrigen Ausbeuten die Bildung halogenhaltiger Nebenprodukte und von Salzen.
Verfahren zur Herstellung von Isocyanatoorganosilanen sind die Hydrosilylierung von Alkenisocyanaten in Anwesenheit unterschiedlicher Edelmetall-Katalysatoren bei erhöhter Temperatur (siehe EP-OS 0 709 392, JP-A-5 206 525, US 1 371 405).

Nachteilig wirken sich die in einigen Fällen niedrigen Selektivitäten, Nebenproduktbildungen und notwendige höhere Katalysator-Konzentrationen, was neben dem Kostenfaktor zu Verunreinigungs- und Abfallproblemen führt, aus.

Des weiteren sind Verfahren bekannt, nach denen Halogenorganosilane mit Metallcyanaten zu Isocyanuratosilanen bzw. in Gegenwart von Alkohole: zu Carbomatoorganosilanen reagieren, die thermisch zu Isocyanatoorganosilanen gespalten werden (siehe US 3 821 218, US 3 598 852, US 3 494 951, CA 943 544, DE-OS 35 24 215).

Nachteilig wirken sich hohe Reaktionstemperaturen und der Anfall von Salzen aus. Als Lösungsmittel wird bevorzugt das toxische Dimethylformamid eingesetzt.

Die thermische Spaltung von Carbamatoorganosilanen unter atmosphärischem oder reduziertem Druck in der Gas- oder Flüssigphase stellt ebenfalls ein Verfahren zur Herstellung von Isocyanatoorganosilanen dar (siehe US 5 393 910, JP-A-63 250 391, US 3 607 901, EP-OS 0 649 850).

Durch notwendigerweise höhere Temperaturen und durch teilweisen Zusatz von Halosilan-Verbindungen werden zwar die Spaltungsleistungen erhöht, gleichzeitig nehmen aber die Nebenproduktbildungen zu.

Kontinuierliche Verfahren zur Herstellung von aliphatischen und cycloaliphatischen Biscarbamaten aus Harnstoff Diaminen und Alkoholen und die katalytische Spaltung der Biscarbamate in flüssiger Phase zu Diisocyanaten sind bekannt (siehe EP-OS 0 355 443, EP-OS 0 568 782).

Der Erfindung liegt die Aufgabe zugrunde, ein verbessertes, wirtschaftliches, insbesondere kontinuierliches Verfahren zur Herstellung von Carbamatoorganosilanen und Isocyanatoorganosilanen unter Vermeidung der oben genannten Nachteile zu entwickeln.

Als Lösung beschreibt diese Erfindung
(a) die einstufige Herstellung von Carbamatoorganosilanen (V),
(b) bevorzugt die zweistufige Herstellung von Carbamatoorganosilanen (V), wobei im ersten Schritt Harnstofforganosilane (III) gebildet werden, aus Aminoorganosilanen (I), Harnstoff (II) und Alkoholen (IV) und
(c) die katalytische Spaltung der Carbamatoorlganosilane (V) in flüssiger Phase zu Isocyanatoorganosilanen (VI)
nach folgenden allgemeinen Formeln: 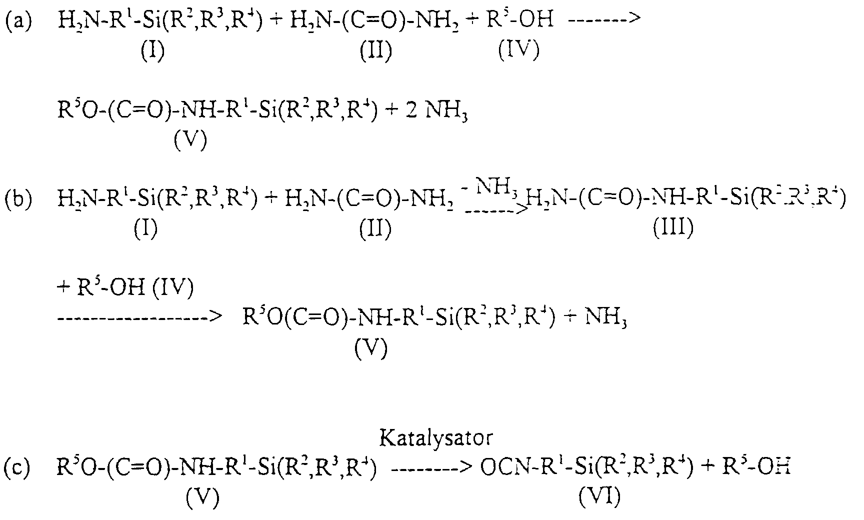
- R¹: Alkyl-, verzweigte Alkyl-, Cycloalkyl-, Alkenyl-, Alkylalkoxyalkyl, Aryl-, Alkaryl-, Aralkyl-Gruppe;
- R², R³, R⁴: Alkyl-, verzweigte Alkyl-, Cycloalkyl-, Alkoxy-, Alkoxy-substituierte Alkoxy-, Siloxy-, Aryl-, Alkaryl-, Aralkyl-Gruppe;
- R⁵: Alkyl-, Cycloalkyl-Gruppe, oder den Gruppen
R², R³, R⁴ entsprechend.

R¹, R², R³, R⁴ können zusätzlich funktionelle Gruppen, wie Ether, Thioether, Sulfone, Ketone, Ester, Amide, Nitrile, enthalten.

Gegenstand der Erfindung ist ein Verfahren zur Herstellung von Carbamatoorganosilanen (V) durch
a) einstufige Umsetzung von Aminoorganosilanen (I), Harnstoff (II) und Alkoholen (IV) in einer Rührkesselkaskade bei 150-250 ^{°}C und 7-40 bar
   oder
b) zweistufige Umsetzung von Aminoorganosilanen (I) und Harnstoff (II) in Alkoholen (IV) als Lösemittel in einem Destillationsreaktor bei 100-130 °C und 0,7-1,5 bar (abs.) zu Harnstofforganosilanen (III) als Zwischenprodukt und anschließender Umsetzung von III mit Alkoholen (IV) in einem Druckdestillationsreaktor bei 150-250 °C und 7-40 bar.

Erfindungsgemäß kann die Herstellung durch einstufige Umsetzung direkt zum Endprodukt V führen. Bevorzugt erfolgt jedoch die erfindungsgemäße Herstellung von V durch eine zweistufige Herstellung, insbesondere kontinuierlich, wobei das Zwischenprodukt III in einem ersten Schritt hergestellt wird. Dieses Zwischenprodukt kann isoliert oder direkt weiter zu V umgesetzt werden.

Gegenstand der Erfindung ist demnach auch ein Verfahren zur Herstellung von Harnstofforganosilanen (III) durch Umsetzung von Aminoorganosilanen (1) und Harnstoff (II) in Alkoholen (IV) als Lösemitteln in einem Destillationsreaktor bei 100-130 °C und 0,7-1,5 bar (abs.).

Ein weiterer Gegenstand der Erfindung ist ein Verfahren zur Herstellung von Isocyanatoorganosilanen (VI) durch
a) einstufige Umsetzung von Aminoorganosilanen (I), Harnstoff (II) und Alkoholen (IV) in einer Rührkesselkaskade bei 150-250 °C und 7-40 bar
   oder
b) zweistufige Umsetzung von Aminoorganosilanen (I) und Harnstoff (II) in Alkoholen (IV) als Lösemittel in einem Destillationsreaktor bei 100-130 °C und 0,7-1,5 bar (abs.) zu Harnstofforganosilanen (III) als Zwischenprodukt und anschließender Umsetzung von III mit Alkoholen (IV) in einem Druckdestillationsreaktor bei 150-250 °C und 7-40 bar zu Carbamatoorganosilanen (V)
   und
c) katalytischer Spaltung von V in flüssiger Phase.

Als Aminoorganosilane (I) für das erfindungsgemäße Verfahren seien beispielhaft genannt:
gamma-Aminopropyltrimethoxysilan
gamma-Aminopropyltriethoxysilan
gamma-Aminopropylmethyldiethoxysilan
gamma-Aminopropylmethyldimethoxysilan
gamma-Aminopropylethyldiethoxysilan
gamma-Aminopropylphenyldiethoxysilan
gamma-Aminopropylphenyldimethoxysilan
delta-Aminobutyltrimethoxysilan
delta-Aminobutyltriethoxysilan
delta-Aminobutylmethyldiethoxysilan
delta-Aminobutylmethyldimethoxysilan
delta-Aminobutylethyldiethoxysilan
delta-Aminobutylethyldimethoxysilan
delta-Aminobutylphenyldiethoxysilan
delta-Aminobutylphenyldimethoxysilan
beta-Aminoisopropyltrimethoxysilan
beta-Aminobutyltrimethoxysilan
beta-Aminobutyltriethoxysilan
beta-Aminobutylmethyldiethoxysilan
beta-Aminobutylmethyldimethoxysilan
beta-Aminobutylethyldiethoxysilan
beta-Aminobutylethyldimethoxysilan
beta-Aminobutylphenyldiethoxysilan
beta-Aminobutylphenyldimethoxysilan
gamma-Aminopropyltripropoxysilan
gamma-Aminopropyltributoxysilan
gamma-Aminopropylphenylmethyl-n-propoxysilan
gamma-Aminopropylmethyldibutoxysilan
gamma-Aminopropyl-tris(methoxyethoxyethoxy)silan
gamma-Aminopropyldimethylethoxysilan
gamma- Aminopropyldiethylmethylsilan
gamma-Aminopropyl-tris(trimethylsiloxy)silan
ω-Aminoundecyltrimethoxysilan
delta-Aminobutyldimethylmethoxysilan
delta-Amino(3-methylbutyl)methyldimethoxysilan
delta-Amino(3-methylbutyl)methyldiethoxysilan
delta-Amino(3-methylbutyl)trimethoxysilan
   bevorzugt
gamma-Aminopropyltrimethoxysilan;
gamma-Aminopropyltriethoxysilan;
gamma-Aminopropylmethyldimethoxysilan und
gamma-Aminopropylmethyldiethoxysilan.

Als Alkohole (IV) sind grundsätzlich alle primären Alkohole geeignet, die einerseits eine ausreichend große Differenz in der Siedetemperatur zum jeweiligen Carbamatoorganosilan aufweisen und andererseits ein Verdampfen des Carbamatoorganosilans und Kondensation der Spaltprodukte unter verfahrenstechnisch günstigen Betriebsdrücken gestatten. Darüberhinaus muß der Alkohol so gewählt werden, daß keine Reaktionen, z. B. Umesterungen mit der Si(R², R³, R⁴)-Gruppierung auftreten.

Infrage kommen daher besonders Methanol, Ethanol, Propanol, Butanol, Isobutanol, Pentanol, Isopentanole, Hexanol, Isohexanole, Cyclohexanol, 2-Ethylhexanol, bevorzugt Methanol, Ethanol.

Beschrieben wird hier die bevorzugte zweistufige, kontinuierliche Herstellung von Carbamatoorganosilanen.
- Es bedeuten:: AOS Aminoorganosilan (I)
HOS Harnstofforganosilan (III)
COS Carbamatoorganosilan (V)
IOS Isocyanatoorganosilan (VI)

Die Umsetzung von AOS mit Harnstoff zum HOS in Gegenwart von Alkohol als Lösungsmittel erfolgt in einem Destillationsreaktor, wobei die Edukte kontinuierlich auf den obersten Boden aufgegeben werden und das freigesetzte Ammoniak durch Alkoholbrüden, die im Sumpf des Destillationsreaktors eingeführt werden, ausgetrieben wird. Das Ammoniak/Alkohol-Gemisch wird, um die Abscheidung von Ammoniumcarbamat zu vermeiden, in einem Kondensator bei Temperaturen von 20 bis 50 °C partiell kondensiert. Aus dem Kondensat wird ammoniakfreier Alkohol durch Destillation in der dem Druckdestillationsreaktor z. B. nachgeschalteten Kolonne zurückgewonnen.

Das Molverhältnis der Edukte AOS: Harnstoff: Alkohol variiert von 1:1,0-1,2 : 3-10. Der Destillationsreaktor besitzt mindestens 4 Böden. Die Reaktion wird bei Temperaturen von 100 bis 130 °C und Drücken von 0,7 bis 1,4 bar (abs.) durchgeführt. Die erforderliche Verweilzeit im Destillationsreaktor beträgt 4 bis 10 h, vorzugsweise 6 bis 8 h. Die zum Austreiben des Ammoniaks im Sumpf eingebrachte Alkoholmenge beträgt 0,05 bis 3 kg/kg, vorzugsweise 0,1 bis 1 kg/kg HOS, wobei die so eingebrachte Alkoholmenge zusammen mit dem gebildeten Ammoniak am Kopf abgezogen, nach partieller Kondensation in einer Alkoholrückgewinnungskolonne von restlichen Ammoniak befreit und in den Sumpf zurückgeführt wird.

Um möglichst vollständige Umsetzung des Harnstoffs zum HOS zu erreichen, ohne daß es bereits zur Bildung von (N-unsubstituiertem) O-Organocarbamatosilan kommt, ist die Reaktionstemperatur auf maximal 130 °C begrenzt. Die aus der gewünschten Reaktionstemperatur, der Art und dem Verhältnis der Edukte sich ergebende Reaktionsgeschwindigkeit bestimmt die Verweilzeit und damit die Dimensionierung des Destillationsreaktors.

Der Vorteil des Destillationsreaktors gegenüber einer Rührkesselkaskade (einstufig) besteht darin, daß das Reaktionsgemisch in einer Destillationskolonne im Gegenstrom zu den im Sumpf eingebrachten Alkoholbrüden geführt wird, wobei jeder Boden praktisch einer Kaskadenstufe entspricht. Durch die eingebrachten Alkoholbrüden erfolgt eine derart intensive Durchmischung der Flüssigkeit auf den einzelnen Böden daß entsprechende Rühreinrichtungen nicht mehr erforderlich sind. Daraus resultiert eine energetisch, betriebstechnisch und investitionsmäßig günstige Einrichtung. Der Energieaufwand ist erheblich geringer als bei der Rührkesselkaskade, da nur einmal die Alkoholbrüden erzeugt und kondensiert werden müssen. Entsprechend gering ist der apparative sowie meß- und regeltechnische Aufwand.

Der im Sumpf des Destillationsreaktors anfallende, in Alkohol gelöste Roh-HOS wird kontinuierlich zusammen mit Kreislaufrückführung auf den obersten Boden des Druckdestillationsreaktors gefahren. Die Speisung kann außerhalb mit einem Wärmetauscher oder auch durch einen Einsteck-Erhitzer o. ä. in der Kolonne auf die erforderliche Reaktionstemperatur gebracht werden.

Hier erfolgt die Umsetzung des HOS mit dem Alkohol zum COS bei erhöhter Temperatur und erhöhtem Druck, wobei Ammoniak freigesetzt wird, das aus kinetischen Gründen aus dem Reaktionsgemisch entfernt werden muß. Dies geschieht durch Alkoholbrüden, die im Sumpf des Druckdestillationsreaktors eingeführt werden.

Die Alkoholbrüden werden zweckmäßigerweise in einem am Sumpf der Kolonne angebrachten Verdampfer erzeugt.

Die Vorteile des Druckdestillationsreaktors gegenüber einer Rührkesselkaskade sind die gleichen wie beim Destillationsreaktor. Die für vollständigen Umsatz erforderlichen Stufen können bei Verwendung einer Rührkesselkaskade aus Kostengründen nicht realisiert werden, so daß dafür nicht vollständiger Umsatz und damit entsprechender Ausbeuteverlust in Kauf genommen werden muß (s. auch Ullmanns Encyklopädie der technischen Chemie, 4. Auflage 1973, Bd. 3, S. 342-349).

Die Reaktionsgeschwindigkeit der COS-Bildung wird bestimmt durch die Parameter Temperatur, Druck, Verhältnis von HOS zu Alkohol, eingebrachte Alkoholbrüden im Sumpf und Anzahl der Stufen des Druckdestillationsreaktors. Für das erfindungsgemäße Verfahren haben sich Drücke von 7 bis 40 bar, Temperaturen im Sumpf des Druckdestillationsreaktors von 150 bis 250 °C und am Kopf des Druckdestillationsreaktors von 130 bis 210 °C, ein molares Verhältnis von Bisharnstoff zu Alkohol von 1: 2 bis 12, eingebrachte Alkoholbrüden im Sumpf in einer Menge von 0,5 bis 3 kg/kg, vorzugsweise 1 bis 4 kg/kg gebildetem COS als zweckmäßig erwiesen. Die zum vollständigen Umsatz erforderliche mittlere Verweilzeit im Druckdestillationsreaktor beträgt 5 bis 20 h, vorzugsweise 8 bis 14 h.

Aufgrund der geringen Reaktionsgeschwindigkeit der Umsetzung des COS mit Alkohol ist eine hohe Temperatur wünschenswert, jedoch wegen der Bildung von Nebenprodukten auf maximal 250 °C begrenzt. Der Kolonnendruck stellt sich entsprechend ein und hängt dann nur noch vom verwendeten Alkohol und vom gewählten Gewichtsverhältnis COS zu Alkohol im Sumpf ab. Dieses beträgt vorzugsweise 0,3 bis 1,7.

Das am Kopf abgezogene dampfförmige Gemisch aus Alkohol und Ammoniak wird, ohne es zu kondensieren, vorzugsweise unter dem Druck des Druckdestillationsreaktors in den mittleren Bereich einer Destillationskolonne geführt, in der durch Rektifikation im Sumpf bei mindestens 170 °C, je nach gewähltem Alkohol und Betriebsdruck, ammoniakfreier Alkohol gewonnen wird, der in den Sumpf des Destillations- und des Druckdestillationsreaktors zurückgeführt wird. Am Kopf wird das Ammoniak flüssig abgezogen. Um die Belegung des Rückflußkondensators durch gegebenenfalls vorhandenes Ammoniumcarbamat zu verhindern, läßt man zur Temperaturerhöhung am Kopf auf mindestens 60 °C einen entsprechenden Anteil an Alkohol zu. Die so mit dem Ammoniak aus dem Kreislauf ausgetragene Alkoholmenge muß durch Frischalkohol ersetzt werden.

Das im Sumpf des Druckdestillationsreaktors anfallende COS/Alkohol-Gemisch wird in an sich bekannter Weise destillativ gereinigt, wobei der abgetrennte Alkohol zweckmäßigerweise auf den obersten Boden des Destillationsreaktors zurückgerührt wird.

Dem gereinigten COS wird vor Einsatz in die Spaltung der Katalysator als ca. 5 Gew.-%ige Lösung oder Suspension in dem Alkohol, der auch zur Herstellung des Biscarbamats verwendet wird oder in COS in einer Menge von 5 bis 400 ppm, vorzugsweise 20 bis 100 ppm, zudosiert. Als Katalysatoren eignen sich Halogenide oder Oxide von Metallen der Gruppen, IB, IIB, IIIB, IVB, VB, VIB, VIIB und VIIIB des Periodensystems. Vorzugsweise werden Chloride von Zink oder Zinn sowie Oxide von Zink, Mangan, Eisen oder Cobalt verwendet.

Die Spaltung des COS wird bevorzugt in einer kombinierten Spalt- und Rektifizierkolonne durchgeführt, in der im Unterteil gespalten wird und im Oberteil die Spaltprodukte rektifiziert werden (Reaktivdestillation). Das gebildete IOS wird als Roh-IOS im Seitenabzug gewonnen, während der reine Alkohol am Kopf abgezogen wird. Um bei der Spaltung gebildete Nebenprodukte zu entfernen, wird kontinuierlich aus dem Sumpf Reaktionsgemisch in einer Menge von 5 bis 50 Gew.-%, vorzugsweise 15 bis 25 Gew.-%, bezogen auf den Einsatz ausgeschleust. Die Spaltung wird bei einem Sumpfdruck von 5 bis 100 mbar, vorzugsweise 40 bis 80 mbar und einer Sumpftemperatur von 150 bis 260 °C, vorzugsweise 170 bis 220 °C durchgeführt. Die Einspeisung des zu spaltenden COS kann alternativ in die Wälzung zum Fallfilmverdampfer oder in das untere Drittel der Kolonne, vorzugsweise oberhalb der Einrichtung zur Energierückgewinnung erfolgen.

Die kombinierte Spalt- und Rektifizierkolonne ist für die Energiezuführ im Sumpf mit einem Fallfilmverdampfer, im unteren Drittel mit einer Einrichtung zur Energierückgewinnung, im oberen Drittel mit einer Einrichtung zum Abzug von Roh-IOS und am Kopf mit einem Kondensator, Kondensatsammelgefäß und Pumpe für den Rückfluß und den Abzug von reinem Alkohol ausgestattet.

Um eine zu hohe thermische Belastung des COS zu vermeiden, wird der Fallfilmverdampfer für die Energiezuführ im Sumpf der Kolonne so betrieben, daß bei einmaligem Durchgang maximal 20 Gew.-%, vorzugsweise weniger als 10 Gew.-% der Aufgabe verdampfen und daß Flüssigkeit und Brüden im Gleichstrom geführt werden.

Aufgrund der Reaktivität der Isocyanatgruppen und der Silangruppen sollte deren mittlere Verweilzeit in der Spaltzone möglichst gering sein, was durch Minimierung des Flüssigkeitsvolumens durch entsprechende konstruktive Maßnahmen und durch Verwendung von geordneten Packungen mit geringem "hold up" sowie durch möglichst unverzügliche destillative Entfernung des gebildeten IOS aus der Spaltzone erreicht wird. Letzteres wird durch entsprechenden Energieeintrag im Sumpf der kombinierten Spalt- und Rektifizierkolonne realisiert. Dadurch stellt sich ein Konzentrationsprofil in der Kolonne ein, wo im Sumpf im wesentlichen COS weniger als 3 Gew.-% IOS und nicht nachweisbare Mengen an Alkohol vorhanden sind, während die Flüssigkeit im unteren Teil der Kolonne nur noch geringe Mengen an COS enthält.

Der dazu erforderliche Rücklauf wird zweckmäßigerweise durch eine Kondensationsstufe oberhalb der Spaltzone und unterhalb des IOS-Seitenabzugs erzeugt. Diese Betriebsweise ist besonders wirtschaftlich, da die hier abzuführende Energie auf relativ hohem Temperaturniveau anfällt und anschließend nochmals genutzt werden kann, z. B. zur Aufwärmung der Einsatzprodukte, die in den Destillationsreaktor zur HOS-Herstellung geführt werden. Außerdem wird dadurch die Brüdenmenge entsprechend verringert, so daß oberhalb dieses Partialkondensators der Durchmesser der Kolonne entsprechend reduziert werden kann.

Trotz der möglichst unverzüglichen destillativen Entfernung des gebildeten IOS aus der Spaltzone läßt sich die Bildung von höhermolekularen Verbindungen nicht restlos verhindern, so daß kontinuierlich ein dementsprechender Anteil aus dem Sumpf der kombinierten Spalt- und Rektifizierkolonne ausgeschleust werden muß. Diese Produkte werden zur Umsetzung mit dem Alkohol vom Kopf der kombinierten Spalt- und Rektifizierkolonne in einen nachgeschalteten Reaktor geführt.

Die Reinigung des aus der kombinierten Spalt- und Rektifizierkolonne abgezogenen Roh-IOS erfolgt in an sich bekannter Weise durch Vakuumdestillation. Vorlauf und Destillationsrückstand werden zweckmäßigerweise in die kombinierte Spalt- und Rektifizierkolonne zurückgeführt. Die Ausschleusung aus dem Sumpf der kombinierten Spalt- und Rektifizierkolonne sowie der dort am Kopf abgezogene Alkohol werden kontinuierlich gemischt und nach Erwärmung auf 80 bis 140 °C in einem Rohrreaktor unter einem Druck von 2 bar und einer Verweilzeit von 1 bis 4 h, vorzugsweise 2 h umgesetzt, um die Isocyanatgruppen in Carbamatgruppen zu überführen. Das Reaktionsprodukt wird kontinuierlich in den Druckdestillationsreaktor auf den obersten Boden zurückgeführt.

Die Produkte dieser Erfindung, Carbamatoorganosilane, Harnstofforganosilane und Isocyanatoorganosilane, finden aufgrund der unterschiedlich reagierenden Funktionalitäten, der Carbamat- bzw. Isocyanat-Gruppen und der Silan-Gruppen, zahlreiche Einsatzmöglichkeiten, beispielsweise
- zur Oberflächenmodifizierung von anorganischen und organischen Materialien,
- als Haftvermittler zwischen anorganischen Materialien und organischen Polymereren,
- als Vernetzungsagenzien zur Feuchtigkeitsvernetzung von Polymeren,
- für PU-Dichtungsmassen,
- im Lack- und Klebstoffbereich,
- zur Herstellung biologisch wirksamer Produkte, wie Insektizide, Herbizide.

### Beispiel 1: Herstellung von Ethyl-N-triethoxysilylpropylcarbamat

In einem 10 l-Destillationsautoklav werden 3-Aminopropyltriethoxysilan (3321 g, 15 Mol) mit Harnstoff (928 g, 15,45 Mol) und Ethanol (3458 g, 75 Mol) bei 230 °C und einem Druck zwischen 35 und 23 bar zur Reaktion gebracht. Das entstehende Ammoniak wird kontinuierlich mit den Ethanol-Brüden ausgestrippt.

Nach 9 Stunden Reaktionszeit haben > 99 % des Aminoorganosilans umgesetzt. Als Hauptprodukt entsteht nach GC-Analyse mit > 90 % das Ethyl-N-triethoxysilylpropylcarbamat (angegeben ohne Ethanol-Anteil). Als Hauptnebenprodukte bilden sich Carbamidsäureethylester, N, N'-Di(3-triethoxysilylpropyl)harnstoff und 1,1,3,3-Tetraethoxy-1,3-di(N-propylcarbaminsäureethylester)disiloxan.

Durch anschließende mehrstufige Dünnschicht- und Kurzweg-Destillationen im Vakuum werden nicht umgesetztes Ethanol, Leichtsieder sowie höhermolekulare Verbindungen abgetrennt.

Das danach erhaltene farblose Ethyl-N-triethoxysilylpropylcarbamat hat eine Reinheit von > 99 % (GC, SFC).

### Beispiel 2: Herstellung von 3-Isocyanatopropyltriethoxysilan

In einer kombinierten Spaltungs- und Rektifikationsapparatur wird Ethyl-N-triethoxysilylpropylcarbamat, in Anwesenheit von 30 ppm Zinn-II-chlorid, bei einer Sumpftemperatur von ca. 210 °C und einem -druck von 75 mbar kontinuierlich gespalten.

Ein Teil des Sumpfes aus der Spaltungsapparatur wird kontinuierlich ausgeschleust.

Das freigesetzte Ethanol wird am Kopf der Rektifikationskolonne abgezogen und als Mischung mit dem ausgeschleusten Sumpf der Spaltung in die Carbamatherstellung zurückgeführt.

Das 3-Isocyanatopropyltriethoxysilan wird über den Seitenabzug in einer direkt anschließenden Vakuumrektifikation bei einer Sumpftemperatur von 120 °C und einem -druck von 15 mbar auf eine Reinheit > 99 % (GC) aufkonzentriert.

Ein Teil des Sumpfes dieser Rektifikationseinheit, der nicht umgesetztes Urethan enthält, wird kontinuierlich in die Spaltung zurückgeführt.

## Patentansprüche

1. Verfahren zur Herstellung von Carbamatoorganosilanen (V) durch
a) einstufige Umsetzung von Aminoorganosilanen (I), Harnstoff (II) und Alkoholen (IV) in einer Rührkesselkaskade bei 150-250 °C und 7-40 bar
oder
b) zweistufige Umsetzung von Aminoorganosilanen (I) und Harnstoff (II) in Alkoholen (IV) als Lösemittel in einem Destillationsreaktor bei 100-130 °C und 0,7-1,5 bar (abs.) zu Harnstofforganosilanen (III) als Zwischenprodukt und anschließender Umsetzung von III mit Alkoholen (IV) in einem Druckdestillationsreaktor bei 150-250 °C und 7-40 bar.

2. Verfahren zur Herstellung von Harnstofforganosilanen (III) durch Umsetzung von Aminoorganosilanen (I) und Harnstoff (II) in Alkoholen (IV) als Lösemitteln in einem Destillationsreaktor bei 100-130 °C und 0,7-1,5 bar (abs.).

3. Verfahren zur Herstellung von Isocyanatoorganosilanen (VI) durch
a) einstufige Umsetzung von Aminoorganosilanen (I), Harnstoff (II) und Alkoholen (IV) in einer Rührkesselkaskade bei 150-250 °C und 7-40 bar
oder
b) zweistufige Umsetzung von Aminoorganosilanen (I) und Harnstoff (III) in Alkoholen (IV) als Lösemittel in einem Destillationsreaktor bei 100-130 °C und 0,7-1,5 bar (abs.) zu Harnstofforganosilanen (III) als Zwischenprodukt und anschließender Umsetzung von III mit Alkoholen (IV)in einem Druckdestillationsreaktor bei 150-250 °C und 7-40 bar zu Carbamatoorganosilanen (V)
und
c) katalytischer Spaltung von V in flüssiger Phase.

4. Verfahren nach Anspruch 3,
dadurch gekennzeichnet,
daß die katalytische Spaltung von V in einer kombinierten Spalt- und Rektifizierkolonne durchgeführt wird.

5. Verfahren nach Anspruch 4,
dadurch gekennzeichnet,
daß ein Teil des Sumpfes aus der Spalt- und Rektifizierkolonne zusammen mit dem Alkohol vom Kopf der Kolonne in die Reaktionsstufe a) zurückgeführt wird.

6. Verfahren nach einem der Ansprüche 1 bis 5,
dadurch gekennzeichnet,
daß das Verfahren kontinuierlich durchgeführt wird.
